# EUROPÄISCHE PATENTSCHRIFT

(11) **EP 1 179 866 B1**
(45) Veröffentlichungstag und Bekanntmachung des Hinweises auf die Patenterteilung: **05.07.2006**
(21) Anmeldenummer: 01117617.9
(22) Anmeldetag: 24.07.2001
(51) Int. Cl.: H01M 2/30, H01M 2/04

(54) **Anordnung der Anschlusspole eines Akkumulators**
Terminal assembly of a storage battery
Arrangement des bornes de connexion d'un accumulateur

(30) Priorität: 07.08.2000 DE 10038472
(43) Veröffentlichungstag der Anmeldung: 13.02.2002
(73) Patentinhaber: VB Autobatterie GmbH & Co. KGaA., 30419 Hannover (DE)
(72) Erfinder: Nann, Eberhard, Dr., 59494 Soest (DE); Wulf, Ulrich, 59494 Soest (DE)
(74) Vertreter: Gramm, Werner

(56) Entgegenhaltungen:
- EP-A- 0 158 682
- WO-A-99/36977
- US-B1- 6 258 481

## Beschreibung

Die vorliegende Erfindung betrifft einen Akkumulator mit in einem mittels einem Deckel verschlossenen Gehäuse angeordneten, in elektrischer Reihe untereinander verbundenen Zellen und zwei aus dem Gehäuse herausgeführten, mit der ersten bzw. letzten Zelle kontaktierten Anschlüssen, wobei die Anschlüsse in einer zum Deckel im wesentlichen parallelen Ebene liegend seitlich herausgeführt sind.

Akkumulatoren der gattungsgemäßen Art sind an sich bekannt. Derartige Akkumulatoren sind üblicherweise Bleiakkumulatoren, bei welchen in einem Gehäuse eine entsprechende Anzahl von Zellen angeordnet sind, die in elektrischer Reihe miteinander verbunden sind. Die jeweils erste und letzte Zelle der elektrischen Reihe wird mit einem aus dem Gehäuse bzw. aus dem Deckel herausführenden Anschlusspol verbunden, so dass für den Betrieb ein Pluspol und ein Minuspol von der Außenseite des Gehäuses zugänglich sind. Bei einer weit verbreiteten Art von Akkumulatoren, wie sie beispielsweise in Kraftfahrzeugen Verwendung finden, sind die Pole senkrecht zur Deckelebene stehend nach oben aus dem Deckel herausgeführt. Diese liegen üblicherweise weit voneinander beabstandet und sind durch Bleipole gebildet, die zu Zwecken einer guten Kontaktbildung einen großen Durchmesser haben und aufwendig mit zu schraubenden Polklemmen kontaktierbar sind. Auch sind Akkumulatoren bekannt, bei denen die Kontaktpole nicht senkrecht zur Deckelebene sondern dazu parallel seitlich aus dem Akkumulator herausgeführt sind. Auch sind diese Pole weit voneinander beabstandet und müssen wie die oben beschriebenen jeweils einzeln kontaktiert werden. Als Alternative zu den Bleipolen mit großem Durchmesser sind auch Gewindestift-Pole bekannt, bei welchen die Kontaktierung durch Aufstecken von Kontaktfahnen und Fixieren durch Muttern und dergleichen erfolgt.

Die WO 99/36977 beschreibt eine Batterie mit einem Deckel, der eine Entlüftungsventil aufweist. Die Batterie hat mehrere Zellen, die in Reihenschaltung miteinander elektrisch verbunden sind. Das eine Ende der Reihenschaltung ist mit einem elektrischen Batteriepol verbunden und das gegenüberliegende Ende der Reihenschaltung mit dem zweiten Batteriepol. Die Batteriepole sind unten am Gehäuse seitlich angeordnet.

Die EP 0 158 682 A1 offenbart einen Bleiakkumulator mit einem Gehäuse, der eine Trageleiste aufweist. Die Zellenpole werden seitlich aus dem Gehäuse herausgeführt und sind in die Trageleiste integriert Hierzu hat die Trageleiste zwei voneinander getrennte Hohlräume, in denen jeweils ein Pol des Akkumulators angeordnet ist

In allen vorbekannten Fällen erfordert die Bauart wenigstens zwei Durchführungsstellen durch das Gehäuse bzw. den Deckel, wodurch die Fertigung aufwendig wird. Darüber hinaus erfordert bei einer fertigen Batterie der Anschluss an die aus dem Gehäuse bzw. Deckel herausgeführten Pole jeweils einen Montageaufwand an unterschiedlichen Stellen des Akkumulators.

Ausgehend vom vorgeschriebenen Stand der Technik liegt der vorliegenden Erfindung die Aufgabe zugrunde, einen Akkumulator der gattungsgemäßen Art dahingehend weiterzubilden, dass dieser herstellungsseitig vereinfacht und wirtschaftlicher ist und eine Kontaktierung der aus dem Akkumulator herausgeführten Anschlusspole bedienerfreundlicher, sicherer und ohne großen Montageaufwand realisierbar ist.

Zur technischen Lösung dieser Aufgabe wird ein gattungsgemäßer Akkumulator dadurch weitergebildet, dass die Anschlüsse eng zueinander beabstandet angeordnet sind und in dem die Anschlüsse umgebenden Bereich des Gehäuses bzw. des Deckels Kodienrngselemente angeordnet sind, die mit entsprechenden Bereichen eines einzigen Steckerelements zusammenwirken.

Dadurch kann eine polungssichere Kontaktierung garantier werden, da die Kodierungselemente ein falsches Kontaktieren ausschließen.

Gemäß der erfindungsgemäßen Lösung sind die im Bereich einer Seitenkante aus dem Gehäuse herausgeführten Anschlüsse eng zueinander beabstandet. Dabei liegen sie in einer im Wesentlichen parallel zum Deckel liegenden Ebene. Durch die enge Beabstandung ist es möglich, den Durchführungsbereich für die Anschlüsse praktisch an einem Ort auszubilden, wodurch die Fertigung erheblich vereinfacht wird. Auch liegen die Anschlüsse nunmehr beide so eng zueinander, dass sie mit einem einzigen Kontaktierungsvorgang beide gleichzeitigmit einem Steckerelement kontaktierbar sind. Die seitliche und eng beabstandete Herausführung bewirkt darüber hinaus, dass vergleichsweise große Gehäuse- bzw. Deckelflächen direkt benachbart sind, so dass diese zur Montage- bzw. Befestigungsunterstützung herangezogen werden können. Die enge Beabstandung bewirkt darüber hinaus, dass es nunmehr mit einfachen Mitteln und auf einfache Weise möglich ist, den Anschlussbereich mit einer einzigen Abdeckung abzudecken. Insgesamt ist der erfindungsgemäße Akkumulator fertigungstechnisch vereinfacht und bediener- und montagefreundlicher.

In vorteilhafter Weise ist im Deckel eine seitliche Ausnehmung gebildet, in welcher liegend angeordnet die Kontakte positioniert sind. Die Kontakte stehen somit nicht mehr frei aus dem Akkumulatorgehäusebereich heraus, sind also gegen Beschädigung geschützt. Darüber hinaus liegen sie parallel zu einem sehr großen Gehäuse- bzw. Deckelflächenbereich, so daß dieser bei der Kontaktierung als Führung dienen kann und als Abstützung bei der Befestigung. Durch die Konstruktion des Deckels kann zwischen den eng zueinander beabstandeten Kontakten auf einfache Weise ein Isolationssteg ausgebildet werden.

Mit besonderem Vorteil wird vorgeschlagen, daß die Zellen derart im Gehäuse angeordnet und untereinander verbunden sind, daß die den Anschlüssen nächstliegenden Zellen die mit den Anschlüssen zu kontaktierenden erste bzw. letzte Zelle bilden. Auf diese Weise wird die Akkumulatorherstellung vereinfacht und die Kontaktierungswege im Inneren des Gehäuses zwischen den Anschlüssen und den jeweiligen Zellen sind sehr kurz. Vorteilhafter Weise können an den Bleigittem der jeweiligen Zellen auf einfache Weise Bleiwinkel angeordnet werden, die in den Bereich der Ausnehmung herausstehen. Die Anschlüsse können gemäß einem Vorschlag der Erfindung Messingstifte sein, die mit den sehr kurz ausgebildeten Anschlußwinkeln verbunden sind. Die Anordnung der Anschlüsse in der seitlichen Ausnehmung des Deckels bei enger Beabstandung ermöglichen die Verwendung einer einfachen Abdeckklappe, um den gesamten Anschlußbereich mit einem einzigen Handgriff zu verschließen, bzw. zugänglich zu machen. Die Anschlüsse sind somit während Lagerung und Transport vollständig geschützt in der Gesamtgehäusekontur angeordnet und somit gegen Beschädigung gesichert.

Die erfindungsgemäße Anordnung der Anschlüsse ermöglicht nunmehr erstmalig die Verwendung eines Steckerelementes zur Kontaktierung der Anschlüsse zu dem Akkumulatorbetrieb. Ein solches Steckerelement kann bei der Verwendung von Messingstiften als Anschlußpole Steckerhülsen aufweisen. Das Gehäuse des Steckers kann im Bereich der Anschlüsse gehäuse- bzw. deckelseitig geführt und gelagert werden, daß eine sichere Herstellung der Verbindung einerseits und eine sichere Fixierung der Verbindung andererseits gewährleistet sind.

In vorteilhafter Weise handelt es sich bei dem erfindungsgemäßen Akkumulator um einen 36 Volt-Akkumulator, bei welchem die Anschlüsse im Wesentlichen parallel zur Anordnung der Zellenstapel in einem Mittelbereich einer Deckelseitenkante herausgeführt sind.

Mit der Erfindung werden gattungsgemäße Akkumulatoren dahingehend weitergebildet, dass durch die eng beabstandete Herausführung der Anschlüsse die Herstellung und Montage des Akkumulators vereinfacht werden, weil die Durchführungsbereiche nunmehr an einer Stelle örtlich begrenzt ausgeführt werden müssen. Darüber hinaus ist die Kontaktierung der Anschlüsse im Betrieb erheblich vereinfacht und der Akkumulator insgesamt bedienungsfreundlicher und sicherer.

Weitere Vorteile und Merkmale der Erfindung ergeben sich aus der folgenden Beschreibung anhand der Figuren. Dabei zeigen:
- Figur 1:: eine Draufsicht auf ein Ausführungsbeispiel eines Akkumulators;
- Figur 2:: eine Seitenansicht des Deckelbereichs des Akkumulators gemäß Figur 1 und
- Figur 3:: eine teilgeschnittene Seitenansicht des Deckels des Akkumulators gemäß III-III in Figur 1 im Anschlussbereich.

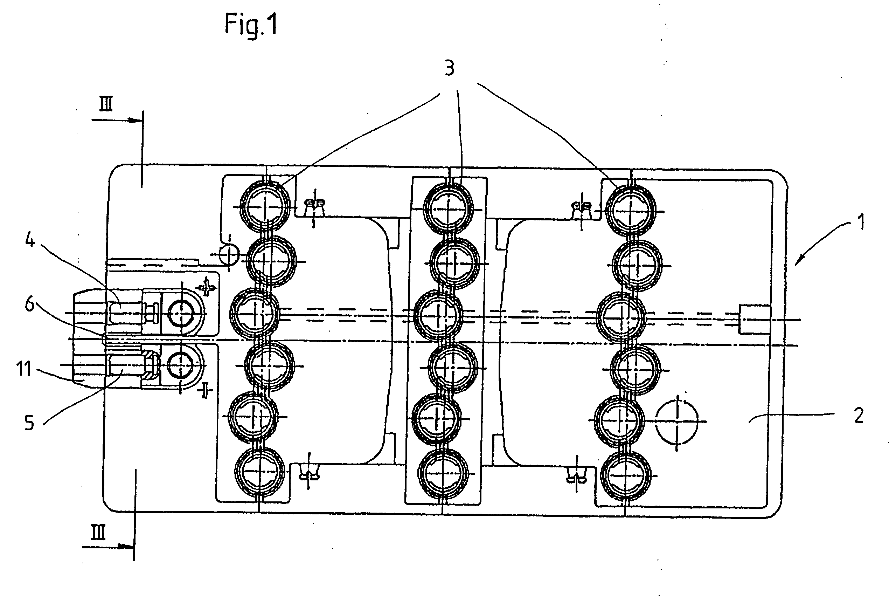

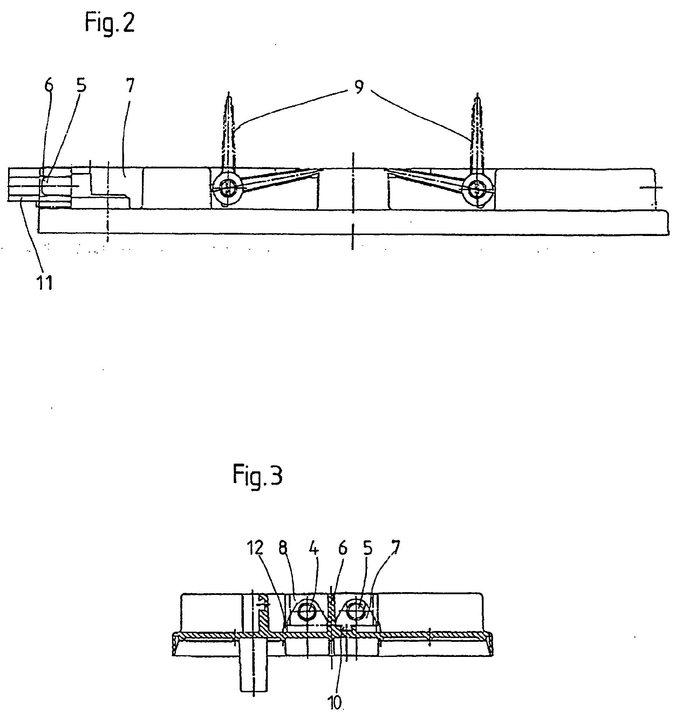

Figur 1 zeigt die Draufsicht auf einen Akkumulator 1, wobei in dem Deckel 2 die Öffnungen 3 zu den unterangeordneten Zellen ausgebildet sind. Im abgezeigten Ausführungsbeispiel ist ein 36-Volt Akkumulator mit 18 in drei Stapeln angeordneten Zellenpaketen bestückt, die untereinander in elektrischer Reihe derart kontaktiert sind, dass zwei in einem Randbereich liegende mittlere Zelle die erste bzw. letzte Zelle der Reihe bilden. An diesen Zellen sind ein Pluspol 4 und ein Minuspol 5 angeordnet, die durch einen Isolationssteg 6 voneinander isoliert sind. Aus Figur 3 ergibt sich, daß der Isolationssteg durch den Aufbau des Deckels als Spritzgußteil integriert ausgebildet ist. Die Anschlußwinkel 7, 8, vorzugsweise Bleiwinkel, die mit den Bleigittem der entsprechenden Zellen verbunden werden, sind in den Figuren 2 und 3 erkennbar. Gemäß Figur 2 sind in dem Deckel schwenkbare Griffelemente 8 angeordnet.

Ein in Figur 1 und 2 erkennbarer Stecker 11 umfaßt ein Steckergehäuse, in welchem Anschlußbuchsen angeordnet sind, die auf die Anschlußstifte aufsteckbar sind. Die Anschlüsse selbst sind als mit den Anschlußwinkeln 7, 8 verbundene Messingstifte 4, 5 beispielsweise mit einem 10 mm Durchmesser ausgebildet. Sie sind innerhalb der Gehäusedeckel konturgeschützt angeordnet und bei Kontaktherstellung überdecken sich Gehäuse und Stecker über eine große Fläche, wodurch die Kontaktierung gesichert und eine Führung bereitgestellt wird. Eine Kodierungsnut 10 im Bereich eines der Anschlußstücke verhindert einen Falschanschluß. Auch können sonstige Führungsstege 12 oder dergleichen für die Kodierung verwendet werden.

Durch die örtlich enge Anordnung der Anschlüsse 4, 5 über die Winkelstücke 7, 8 zu den letzten Zellen der aufgebauten elektrischen Zellenreihe ergeben sich kurze Montagewege und die enge Beabstandung der Anschlüsse 4, 5 zueinander werden die Gehäusedurchführungsbereich auf einen Ort begrenzt und größenmäßig minimiert. Ein nicht gezeigter Deckel ermöglicht die sichere Abdeckung des Anschlußbereiches auf einfache Weise. Insgesamt ist der gezeigte Akkumulator hinsichtlich Herstellung und Montage erheblich vereinfacht und in Bezug auf die Kontaktierung für den Betrieb und in Bezug auf die Sicherheit erheblich verbessert.

Das beschriebene Ausführungsbeispiel dient nur der Erläuterung und ist nicht beschränkend.

### Bezugszeichenliste

- 1: Akkumulator
- 2: Deckel
- 3: Öffnung
- 4: Anschluß
- 5: Anschluß
- 6: Steg
- 7: Anschlußwinkel
- 8: Anschlußwinkel
- 9: Griff
- 10: Nut
- 11: Stecker
- 12: Steg

## Patentansprüche

1. Akkumulator (1) mit in einem mittels einem Deckel (2) verschlossenen Gehäuse angeordneten, in elektrischer Reihe untereinander verbundenen Zellen und zwei aus dem Gehäuse herausgeführten, mit der ersten bzw. letzten Zelle kontaktierten Anschlüssen (4, 5),wobei die Anschlüsse (4, 5) in einer zum Deckel (2) im Wesentlichen parallelen Ebene liegend seitlich herausgeführt sind, ***dadurch gekennzeichnet, dass*** die Anschlüsse (4, 5) eng zueinander beabstandet angeordnet sind und in dem die Anschlüsse (4, 5) umgebenden Bereich des Deckels (2) bzw. des Gehäuses Kodierungselemente für die Zusammenwirkung mit einem einzigen Steckerelement ausgebildet sind.

2. Akkumulator (1) nach Anspruch 1, **dadurch gekennzeichnet, dass** die Anschlüsse (4, 5) in einer dem Deckel (2) angeordneten, seitlichen Ausnehmung angeordnet sind.

3. Akkumulator (1) nach einem der vorhergehenden Ansprüche, **dadurch gekennzeichnet, dass** zwischen den beiden Anschlüssen (4, 5) ein Isolationssteg angeordnet ist.

4. Akkumulator (1) nach einem der vorhergehenden Ansprüche, **dadurch gekennzeichnet, dass** die Zellen im Gehäuse derart angeordnet und elektrisch untereinander verbunden sind, dass die den Anschlüssen (4, 5) am nächsten liegenden Zellen die erste bzw. letzte Zelle bilden.

5. Akkumulator (1) nach einem der vorhergehenden Ansprüche, **dadurch gekennzeichnet, dass** die Anschlüsse (4, 5) Messingstifte sind.

6. Akkumulator nach einem der vorhergehenden Ansprüche, **dadurch gekennzeichnet, dass** die Anschlüsse (4, 5) über Bleiwinkel mit der jeweiligen Zelle kontaktiert sind.

7. Akkumulator (1) nach einem der vorhergehenden Ansprüche, **dadurch gekennzeichnet, dass** der Anschlussbereich mit einer Abdeckung verschließbar ist

8. Akkumulator (1) nach einem der vorhergehenden Ansprüche, **dadurch gekennzeichnet, dass** dieser ein 36 Volt-Akkumulator ist

## Claims

1. Accumulator (1) with cells, which are electrically interconnected in series and which are arranged in a housing that is closed by means of a lid (2), and two connections (4, 5) that are led out of the housing and that are contacted with the first and last cells, respectively, wherein the connections (4, 5) are led out laterally, whereby they lie in a plane that is essentially parallel to the lid (2), **characterized in that** the connections (4, 5) are arranged spatially close to one another and that coding elements are constructed in the lid (2) or housing region that surrounds the connections (4, 5), whereby these coding elements are for operation in conjunction with a single plug element.

2. Accumulator (1) in accordance with Claim 1, **characterized in that** the contacts (4, 5) are arranged in a lateral recess that is arranged in the lid (2).

3. Accumulator (1) in accordance with one of the preceding claims, **characterized in that** an insulation cross-piece is arranged between the two connections (4, 5).

4. Accumulator (1) in accordance with one of the preceding claims, **characterized in that** the cells in the housing are arranged and electrically interconnected in such a way that the cells that are located nearest to the connections (4, 5) constitute the first and last cells, respectively.

5. Accumulator (1) in accordance with one of the preceding claims, **characterized in that** the connections (4, 5) are brass pegs.

6. Accumulator (1) in accordance with one of the preceding claims, **characterized in that** the connections are contracted with the cell in question via lead elbows.

7. Accumulator (1) in accordance with one of the preceding claims, **characterized in that** the connection region is capable of being sealed off with a cover.

8. Accumulator (1) in accordance with one of the preceding claims, **characterized in that** it is a 36 volt accumulator.

## Revendications

1. Accumulateur (1) comportant un boîtier fermé par un couvercle (2), muni de cellules branchées en série et de deux éléments de connexion (4, 5) sortant du boîtier et en contact avec la première et la dernière cellule,
les éléments de connexion (4, 5) sortant latéralement dans un plan pratiquement parallèle au couvercle (2),
**caractérisé en ce que**
les éléments de connexion (4, 5) sont étroitement rapprochés et
la zone du couvercle (2) ou du boîtier entourant l'élément de connexion (4, 5) comporte des éléments de codage pour coopérer avec un unique connecteur.

2. Accumulateur (1) selon la revendication 1,
**caractérisé en ce que**
les éléments de connexion (4, 5) sont prévus dans une cavité latérale du couvercle (2).

3. Accumulateur (1) selon l'une des revendications précédentes,
**caractérisé par**
une entretoise d'isolation entre les deux éléments de connexion (4, 5).

4. Accumulateur (1) selon l'une des revendications précédentes,
**caractérisé en ce que**
les cellules sont installées dans le boîtier et sont reliées électriquement pour que les cellules les plus proches des éléments de connexion (4, 5) correspondent respectivement à la première et la dernière cellule.

5. Accumulateur (1) selon l'une des revendications précédentes,
**caractérisé en ce que**
les éléments de connexion (4, 5) sont des broches en laiton.

6. Accumulateur (1) selon l'une des revendications précédentes,
**caractérisé en ce que**
les éléments de connexion (4, 5) sont en contact avec la cellule respective par l'intermédiaire de cornières en plomb.

7. Accumulateur (1) selon l'une quelconque des revendications précédentes,
**caractérisé en ce que**
la zone de connexion se ferme par un couvercle.

8. Accumulateur (1) selon l'une quelconque des revendications précédentes,
**caractérisé en ce que**
l'accumulateur est un accumulateur à 36 volts.
